# EUROPÄISCHE PATENTSCHRIFT

(11) **EP 2 864 152 B1**
(45) Veröffentlichungstag und Bekanntmachung des Hinweises auf die Patenterteilung: **08.08.2018**
(21) Anmeldenummer: 13729775.0
(22) Anmeldetag: 20.06.2013
(51) Int. Cl.: B60N 2/08, B60N 2/42, B60N 2/07, B60N 2/015

(54) **LÄNGSEINSTELLER FÜR EINEN FAHRZEUGSITZ UND FAHRZEUGSITZ**
LONGITUDINAL ADJUSTER FOR A VEHICLE SEAT AND VEHICLE SEAT
DISPOSITIF DE RÉGLAGE LONGITUDINAL POUR UN SIÈGE DE VÉHICULE ET SIÈGE DE VÉHICULE

(30) Priorität: 26.06.2012 DE 102012012848; 31.07.2012 DE 102012015343
(43) Veröffentlichungstag der Anmeldung: 29.04.2015
(73) Patentinhaber: Adient Luxembourg Holding S.à r.l., 1855 Luxembourg (LU)
(72) Erfinder: MARKEL, Christian, 55232 Alzey (DE)
(74) Vertreter: Liedhegener, Ralf
(86) Internationale Anmeldenummer: PCT/EP2013/062908
(87) Internationale Veröffentlichungsnummer: WO 2014/001196

(56) Entgegenhaltungen:
- EP-A2- 0 816 158
- DE-U1-202006 005 525

## Beschreibung

Die Erfindung betrifft einen Längseinsteller für einen Fahrzeugsitz mit den Merkmalen des Oberbegriffs des Anspruchs 1. Die Erfindung betrifft auch einen Fahrzeugsitz mit den Merkmalen des Anspruchs 10.

### Stand der Technik

Aus der DE 20 2006 005 525 U1 sind ein gattungsgemäßer Längseinsteller sowie ein gattungsgemäßer Fahrzeugsitz bekannt. Der Fahrzeugsitz umfasst dabei ein Sitzteil, welches mittels vorderer Füße und hinterer Füße mit zwei Sitzschienenpaaren eines Längseinstellers verbindbar ist. Jedes der Sitzschienenpaare umfasst je eine mit der Fahrzeugstruktur verbundene Unterschiene sowie je eine in der Unterschiene verschiebbar geführte Oberschiene. Jeder der besagten Füße umfasst ein Schloss, welches mit je einem an der Oberschiene angebrachten Verriegelungsbolzen verriegelbar ist. Durch Verriegeln der Schlösser mit den Verriegelungsbolzen ist das Sitzteil mit dem Schienenpaar verbindbar.

Jeder Verriegelungsbolzen ist mittels einer Halteklammer an der Oberschiene befestigt. Der Verriegelungsbolzen ist dabei mit der Halteklammer verschweißt und die Halteklammer ist mit der Oberschiene verschraubt. In einem Crashfall auftretende Kräfte werden dann von dem Sitzteil über die Oberschienen und die Unterschienen in die Fahrzeugstruktur eingeleitet.

Aus der EP 0 816 158 A2 ist ein gattungsgemäßer Fahrzeugsitz mit einem gattungsgemäßen Längseinsteller bekannt. Der Längseinsteller umfasst eine mit der Unterschiene verbundene Klammer und eine mit der Oberschiene verbundene Klammer. Im Crashfall verhaken die besagten Klammern miteinander und die im Crashfall auftretende Kräfte werden über die Klammern in die Fahrzeugstruktur eingeleitet.

### Aufgabe

Der Erfindung liegt die Aufgabe zu Grunde, einen Längseinsteller der eingangs genannten Art zu verbessern, insbesondere die Festigkeit des Längseinstellers im Crashfall zu erhöhen.

### Lösung

Diese Aufgabe wird erfindungsgemäß durch einen Längseinsteller mit den im Anspruch 1 genannten Merkmalen gelöst. Vorteilhafte Ausgestaltungen, sind Gegenstand der Unteransprüche.

Demgemäß umfasst ein gattungsgemäßer Längseinsteller für einen Fahrzeugsitz eine Unterschiene und eine darin in Längsrichtung verschiebbar geführte Oberschiene, wobei eine obere Klammer mit der Oberschiene verbunden ist, wobei eine untere Klammer mit der Unterschiene verbunden ist, wobei die untere Klammer mindestens einen unteren Sperrbereich aufweist und die obere Klammer mindestens einen oberen Sperrbereich aufweist, wobei der untere Sperrbereich und der obere Sperrbereich im Normalfall voneinander beabstandet sind und im Crashfall miteinander verhaken.

Erfindungsgemäß ist vorgesehen, dass ein Verriegelungsbügel mit der oberen Klammer verbunden ist, welcher einen in Querrichtung verlaufenden Bolzen umfasst, dass die obere Klammer eine Aussparung aufweist, innerhalb welcher der Bolzen angeordnet ist, und dass der Bolzen in Längsrichtung hinter dem hinteren Ende der Oberschiene angeordnet ist.

Der Verriegelungsbügel dient dabei zur Anbindung eines Sitzteils des Fahrzeugsitzes mittels eines Schlosses und die Aussparung ist derart gestaltet, dass das Schloss beim Verriegeln mit dem Bolzen des Verriegelungsbügels in die Aussparung eintaucht. Dadurch kann ein Schloss verwendet werden, welches in Querrichtung eine größere Ausdehnung und damit eine höhere Festigkeit aufweist. Die Ausdehnung des Schlosses in Querrichtung ist somit lediglich durch die lichte Weite zwischen den Randbereichen der Unterschiene begrenzt.

Dadurch werden im Crashfall auftretende Kräfte zusätzlich von dem Sitzteil über die obere Klammer und die untere Klammer in die Fahrzeugstruktur eingeleitet. Dadurch ist die Festigkeit des Längseinstellers im Crashfall erhöht.

Vorzugsweise ist der mindestens eine obere Sperrbereich durch eine doppelte Umbiegung eines Haltebereichs der oberen Klammer gebildet. Eine solche doppelte Umbiegung ist verhältnismäßig einfach zu fertigen.

Vorzugsweise ist ferner der mindestens eine untere Sperrbereich durch eine doppelte Umbiegung eines Seitenbereichs der unteren Klammer gebildet. Eine solche doppelte Umbiegung ist verhältnismäßig einfach zu fertigen.

Gemäß einer vorteilhaften Ausgestaltung der Erfindung erstreckt sich die obere Klammer in Längsrichtung nach hinten über die Oberschiene hinaus. Dadurch erhöht sich der Bereich der Überdeckung des oberen Sperrbereichs mit dem unteren Sperrbereich.

Ebenso erstreckt sich gemäß einer vorteilhaften Ausgestaltung der Erfindung die untere Klammer in Längsrichtung nach hinten über die Unterschiene hinaus. Dadurch erhöht sich der Bereich der Überdeckung des unteren Sperrbereichs mit dem oberen Sperrbereich.

Vorteilhaft weist der Verriegelungsbügel zwei in Längsrichtung verlaufende Schenkel auf, welche durch den Bolzen verbunden sind. Dadurch ist die Festigkeit der Verbindung zwischen der oberen Klammer und dem Verriegelungsbügel erhöht.

Vorzugsweise umfasst die obere Klammer einen Befestigungsbereich, welcher an der Oberschiene befestigt ist, wobei der Befestigungsbereich zwei Ausbuchtungen zur Aufnahme der Schenkel umfasst.

Die Aussparung erstreckt sich dabei vorzugsweise in Längsrichtung und in Querrichtung innerhalb des Befestigungsbereichs.

Die Montage des Längseinstellers ist vereinfacht, wenn der Verriegelungsbügel mit der oberen Klammer verschweißt ist. Vorzugsweise werden der Verriegelungsbügel und die obere Klammer vor der Befestigung an der Oberschiene miteinander verschweißt.

Diese Aufgabe wird auch durch einen Fahrzeugsitz mit den im Anspruch 10 genannten Merkmalen gelöst, welcher mindestens einen erfindungsgemäßen Längseinsteller aufweist.

Der Fahrzeugsitz umfasst vorteilhaft ein Sitzteil, welches an der Oberschiene des Längseinstellers befestigt ist.

Vorzugsweise ist an dem Sitzteil mindestens ein Fuß angebracht, an welchem ein Schloss vorgesehen ist.

Dabei wirkt das Schloss vorzugsweise mit dem Verriegelungsbügel zusammen.

Vorzugsweise greift das Schloss in die Aussparung ein.

Vorzugsweise umgreift das Schloss dabei den Bolzen des Verriegelungsbügels.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:

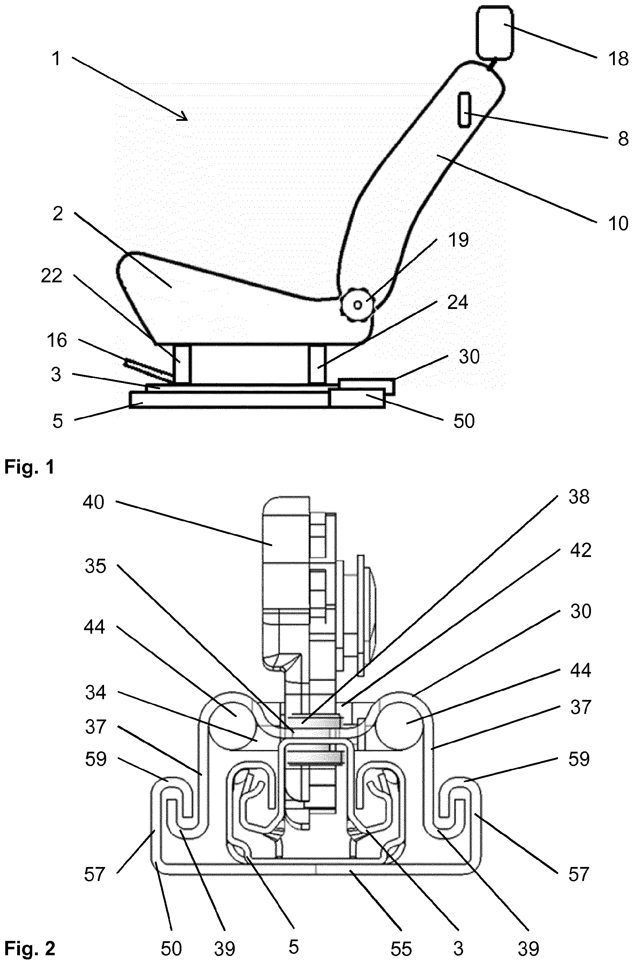

- Fig. 1:: eine schematische Darstellung eines Fahrzeugsitzes,
- Fig. 2:: einen Schnitt durch ein Sitzschienenpaar eines Längseinstellers, senkrecht zur Längsrichtung, mit einem Schloss,

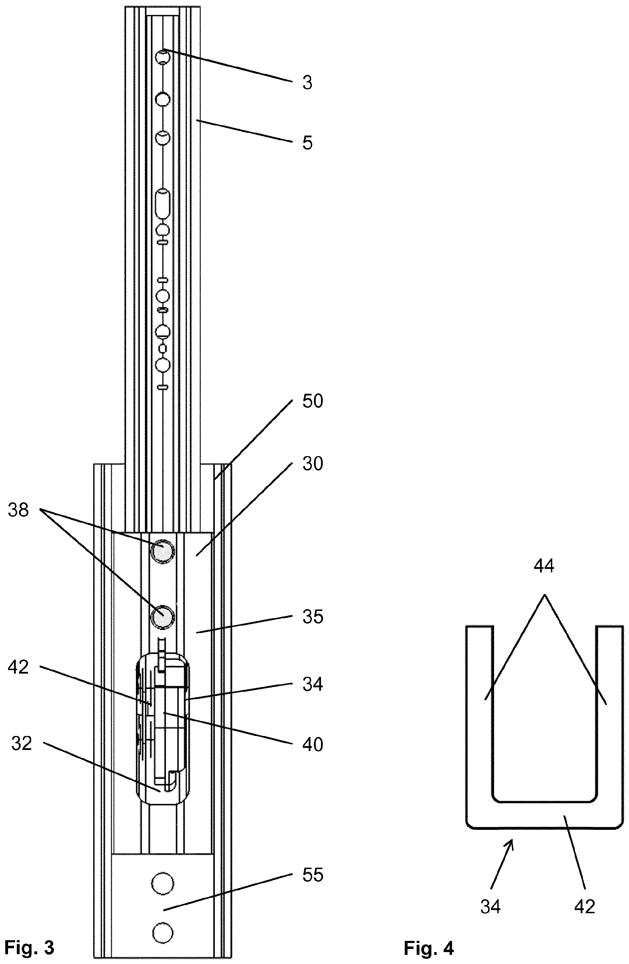

- Fig. 3:: eine Draufsicht auf einen Längseinsteller, von oben, mit einem Schloss,
- Fig. 4:: eine Draufsicht auf einen Verriegelungsbügel von oben und

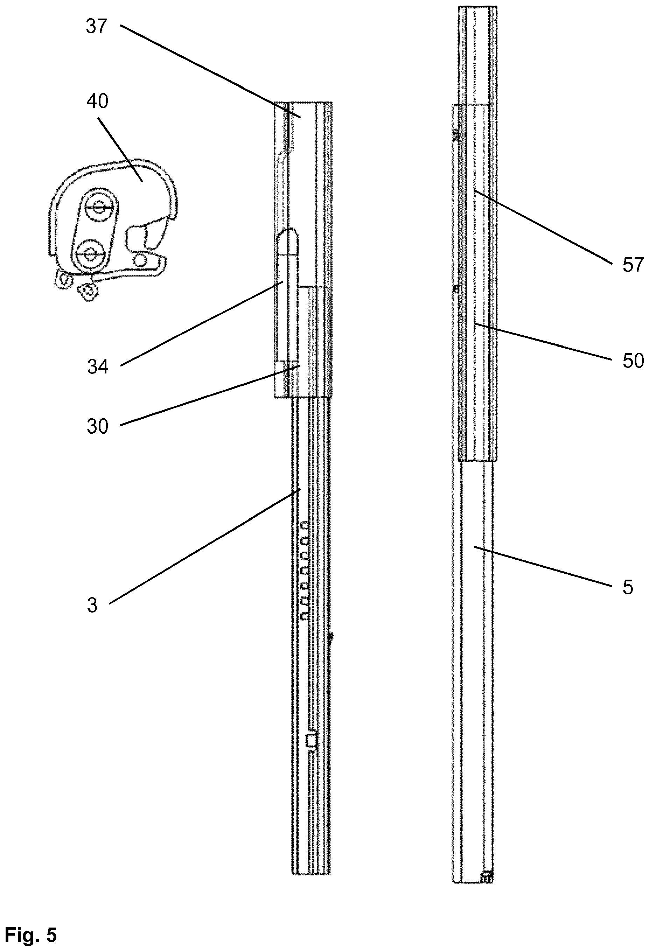

- Fig. 5:: eine Explosionsdarstellung eines Längseinstellers mit einem Schloss.

Ein Fahrzeugsitz 1 für ein Kraftfahrzeug weist ein Sitzteil 2 und eine daran angebrachte, neigungseinstellbare Rückenlehne 10 auf.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Mittels eines seitlich angeordneten, manuell zu bedienenden Lehneneinstellbeschlags 19 ist die Rückenlehne 10 neigungseinstellbar, das bedeutet, der Winkel zwischen dem Sitzteil 2 und der Rückenlehne 10 ist einstellbar. Alternativ ist auch ein elektrischer Antrieb denkbar.

An dem in Vertikalrichtung oberen Ende der Rückenlehne 10, welches dem Sitzteil 2 abgewandt ist, ist ferner eine höheneinstellbare und neigungseinstellbare Kopfstütze 18 angebracht.

Mittels eines Längseinstellers, welcher zwei mit dem Fahrzeugboden des Kraftfahrzeuges verbundene Unterschienen 5 sowie zwei Oberschienen 3 aufweist, ist der Fahrzeugsitz 1 längseinstellbar. Das bedeutet, das Sitzteil 2 ist zusammen mit der Rückenlehne 10 in Längsrichtung, welche vorliegend der Fahrtrichtung entspricht, einstellbar. Dazu ist jede der Oberschienen 3 in jeweils einer der parallel in Längsrichtung verlaufenden Unterschienen 5 verschiebbar geführt. Jede der beiden Oberschienen 3 bildet jeweils mit der zugeordneten Unterschiene 5 ein Sitzschienenpaar. Der Längseinsteller umfasst somit zwei parallel verlaufende Sitzschienenpaare.

Mittels einer Verriegelungsvorrichtung ist jede der beiden Oberschienen 3 mit der jeweiligen Unterschiene 5 verriegelbar. Mittels eines Entriegelungsbügels 16 ist die Verriegelungsvorrichtung entriegelbar. Alternativ ist auch hier ein elektrischer Antrieb denkbar.

Der Fahrzeugsitz 1 umfasst ferner beidseitig je einen vorderen Fuß 22 und einen hinteren Fuß 24, welche an dem Sitzteil 2 angebracht sind. Die Füße 22, 24 dienen der Befestigung des Sitzteils 2 an den Oberschienen 3. An jedem hinteren Fuß 24 ist ein Schloss 40 vorgesehen, mittels welchem der hintere Fuß 24 lösbar mit der jeweiligen Oberschiene 3 verriegelbar ist. Ein derartiges Schloss 40 ist beispielsweise aus der DE 103 04 574 B4 bekannt. An jeder Oberschiene 3 ist je ein Verriegelungsbügel 34 vorgesehen, mit welchem das entsprechende Schloss 40 des hinteren Fußes 24 zusammen wirkt. Der Verriegelungsbügel 34 ist annähernd U-förmig ausgestaltet und weist zwei in Längsrichtung verlaufende Schenkel 44 sowie einen die beiden Schenkel 44 verbindenden, in Querrichtung verlaufenden Bolzen 42 auf. Das Schloss 40 greift dabei an dem Bolzen 42 an.

An der Oberschiene 3 ist in Vertikalrichtung von oben eine obere Klammer 30 angebracht. Die obere Klammer 30 ist vorliegend mit zwei in Längsrichtung zueinander versetzt angeordneten Niete 38 an der Oberschiene 3 befestigt. Alternativ ist es auch denkbar, die obere Klammer 30 mit der Oberschiene 3 zu verschweißen oder zu verschrauben. Die obere Klammer 30 erstreckt sich in Längsrichtung nach hinten über die Oberschiene 3 hinaus.

Die obere Klammer 30 ist im Querschnitt annähernd U-förmig gestaltet und umfasst einen Befestigungsbereich 35, welcher mittels der Niete 38 an der Oberschiene 3 befestigt ist, sowie zwei Haltebereiche 37. In Längsrichtung gesehen verlaufen die Haltebereiche 37 parallel zueinander in Vertikalrichtung und sind an ihren oberen Enden durch den in Querrichtung verlaufenden Befestigungsbereich 35 miteinander verbunden.

Der Befestigungsbereich 35 umfasst in den beiden Randbereichen, an welchen die Haltebereiche 37 anschließen, jeweils eine Ausbuchtung zur Aufnahme der Schenkel 44 des Verriegelungsbügels 34. Der Verriegelungsbügel 34 befindet sich somit in Vertikalrichtung unterhalb des Befestigungsbereichs 35 und wird in Querrichtung von den Haltebereichen 37 umschlossen. Der Verriegelungsbügel 34 ist mit der oberen Klammer 30 verbunden, vorliegend verschweißt.

Die obere Klammer 30 weist ferner eine Aussparung 32 auf, welche sich in Längsrichtung und in Querrichtung innerhalb des Befestigungsbereichs 35 erstreckt, und welche in Längsrichtung hinter der Oberschiene 3 angeordnet ist.

Dabei ist der Verriegelungsbügel 34 derart angeordnet, dass der Bolzen 42 in Längsrichtung innerhalb der Aussparung 32 der oberen Klammer 30 zu liegen kommt. Der Bolzen 42 des Verriegelungsbügels 34 befindet sich somit in Längsrichtung hinter dem hinteren Ende der Oberschiene 3.

Zum Befestigen des Sitzteils 2 an der Oberschiene 3 wird der hintere Fuß 24 über der Aussparung 32 positioniert und in Vertikalrichtung nach unten gedrückt. Das offene Schloss 40 taucht dabei in die Aussparung 32 ein, umgreift den Bolzen 42 des Verriegelungsbügels 34 und verriegelt selbsttätig.

Zum Entriegeln ist ein Betätigungselement 8 vorgesehen, welches vorliegend im oberen Bereich der Rückenlehne 10 angeordnet ist. Bei Betätigung des Betätigungselements 8, welches mittels eines Bowdenzugs mit dem Schloss 40 gekoppelt ist, wird das Schloss 40 entriegelt und gibt den Bolzen 42 des Verriegelungsbügels 34 frei. Danach kann das Schloss 40 aus der Aussparung 32 in Vertikalrichtung heraus gezogen werden.

Jeder vordere Fuß 22 ist vorliegend mittels eines Drehlagers an der Oberschiene 3 befestigt. Bei entriegelten Schlössern 40 der hinteren Füße 24 kann das Sitzteil 2 somit um eine in Querrichtung verlaufende und von den besagten Drehlagern definierte Schwenkachse geschwenkt werden. Diese Schwenkbewegung des Sitzteils 2 und der damit verbundenen Rückenlehne 10 erleichtert beispielsweise einem Insassen den Zugang zu einer Sitzreihe, welche hinter dem Fahrzeugsitz 1 angeordnet ist.

Alternativ ist es aber auch denkbar, dass der vordere Fuß 22 ähnlich wie der hintere Fuß 24 ausgestaltet ist und ebenfalls ein Schloss 40 aufweist. In diesem Fall werden durch Betätigung des Betätigungselements 8 auch die Schlösser 40 der vorderen Füße entriegelt. Dadurch ist das Sitzteil 2 vollständig von den Oberschienen 3 lösbar und der Fahrzeugsitz 1 somit ist aus dem Fahrzeug entnehmbar.

An der Unterschiene 5 ist in Vertikalrichtung von unten eine untere Klammer 50 angebracht. Die untere Klammer 50 ist vorliegend mit der Unterschiene 5 verschweißt. Die untere Klammer 50 erstreckt sich in Längsrichtung nach hinten über die Unterschiene 5 hinaus.

Die untere Klammer 50 ist im Querschnitt annähernd U-förmig gestaltet und umfasst einen Bodenbereich 55, welcher an der Unterschiene 5 befestigt ist, sowie zwei Seitenbereiche 57. Der Bodenbereich 55 befindet sich dabei in Vertikalrichtung unterhalb der Unterschiene 5 und oberhalb des Fahrzeugbodens. In Längsrichtung gesehen verlaufen die Seitenbereiche 57 parallel zueinander in Vertikalrichtung und sind an ihren unteren Enden durch den in Querrichtung verlaufenden Bodenbereich 55 miteinander verbunden.

Die Seitenbereiche 57 der unteren Klammer 50 sind an ihren dem Bodenbereich 55 abgewandten Enden zweifach umgebogen. Besagte Umbiegungen der Seitenbereiche 57 erstrecken sich dabei zunächst in Querrichtung nach innen, also aufeinander zu. Im weiteren Verlauf erstrecken sich die Umbiegungen der Seitenbereiche 57 in Vertikalrichtung nach unten.

Diese doppelten Umbiegungen der Seitenbereiche 57 der unteren Klammer 50 bilden je einen unteren Sperrbereich 59. Die untere Klammer 50 weist somit zwei untere Sperrbereiche 59 auf, welche sich an den dem Bodenbereich 55 abgewandten Enden der Seitenbereiche 57 befinden.

Auch die Haltebereiche 37 der oberen Klammer 30 sind an ihren dem Befestigungsbereich 35 abgewandten Enden zweifach umgebogen. Besagte Umbiegungen der Haltebereiche 37 erstrecken sich dabei zunächst in Querrichtung nach außen, also voneinander weg. Im weiteren Verlauf erstrecken sich die Umbiegungen der Haltebereiche 37 in Vertikalrichtung nach oben.

Diese doppelten Umbiegungen der Haltebereiche 37 der oberen Klammer 30 bilden je einen oberen Sperrbereich 39. Die obere Klammer 30 weist somit zwei obere Sperrbereiche 39 auf, welche sich an den dem Befestigungsbereich 35 abgewandten Enden der Haltebereiche 37 befinden.

Die Umbiegungen der Seitenbereiche 57 und die Umbiegungen der Haltebereiche 37 umgreifen sich dabei wechselseitig. Bei normalem Gebrauch des Fahrzeugsitzes 1 berühren sich die Umbiegungen der Seitenbereiche 57 und die Umbiegungen der Haltebereiche 37 nicht. Im Normalfall sind also die unteren Sperrbereiche 59 und die oberen Sperrbereiche 39 voneinander beabstandet.

Im Crashfall, insbesondere bei einem Frontcrash, erfährt der Fahrzeugsitz 1 eine Beschleunigung relativ zu dem Fahrzeug in Vertikalrichtung nach oben. Dabei zieht der hintere Fuß 24 mit dem Schloss 40 an dem Verriegelungsbügel 34 in Vertikalrichtung. Wenn bei dieser auf die obere Klammer 30 wirkenden Belastung der Befestigungsbereich 35 sich verbiegt, so wandern die Umbiegungen der Haltebereiche 37 in Vertikalrichtung nach oben und verhaken mit den Umbiegungen der Seitenbereiche 57 der unteren Klammer 50.

Im Crashfall verhaken also die unteren Sperrbereiche 59 und die oberen Sperrbereiche 39 miteinander. Dadurch werden im Crashfall auftretende Kräfte zusätzlich von dem Sitzteil 2 über die obere Klammer 30 und die oberen Sperrbereiche 39 weiter in die unteren Sperrbereiche 59 und die untere Klammer 50 und in die Fahrzeugstruktur eingeleitet. Dadurch wird ein weiteres Aufbiegen des Befestigungsbereichs 35 der oberen Klammer 30 sowie ein Aufbiegen des Verriegelungsbügels 34 verhindert.

### Bezugszeichenliste

- 1: Fahrzeugsitz
- 2: Sitzteil
- 3: Oberschiene
- 5: Unterschiene
- 8: Betätigungselement
- 10: Rückenlehne
- 16: Entriegelungsbügel
- 18: Kopfstütze
- 19: Lehneneinstellbeschlag
- 22: Vorderer Fuß
- 24: Hinterer Fuß
- 30: Obere Klammer
- 32: Aussparung
- 34: Verriegelungsbügel
- 35: Befestigungsbereich
- 37: Haltebereich
- 38: Niet
- 39: Oberer Sperrbereich
- 40: Schloss
- 42: Bolzen
- 44: Schenkel
- 50: Untere Klammer
- 55: Bodenbereich
- 57: Seitenbereich
- 59: Unterer Sperrbereich

## Patentansprüche

1. Längseinsteller für einen Fahrzeugsitz (1),
umfassend eine Unterschiene (5) und eine darin in Längsrichtung verschiebbar geführte Oberschiene (3),
wobei eine obere Klammer (30) mit der Oberschiene (3) verbunden ist,
wobei ein Verriegelungsbügel (34) mit der oberen Klammer (30) verbunden ist, welcher einen in Querrichtung verlaufenden Bolzen (42) umfasst,
wobei die obere Klammer (30) eine Aussparung (32) aufweist, innerhalb welcher der Bolzen (42) angeordnet ist,
**dadurch gekennzeichnet, dass**
eine untere Klammer (50) mit der Unterschiene (5) verbunden ist,
wobei die untere Klammer (50) mindestens einen unteren Sperrbereich (59) aufweist und die obere Klammer (30) mindestens einen oberen Sperrbereich (39) aufweist,
wobei der untere Sperrbereich (59) und der obere Sperrbereich (39) im Normalfall voneinander beabstandet sind und im Crashfall miteinander verhaken,und
dass der Bolzen (42) in Längsrichtung hinter dem hinteren Ende der Oberschiene (3) angeordnet ist.

2. Längseinsteller nach Anspruch 1, **dadurch gekennzeichnet, dass** der mindestens eine obere Sperrbereich (39) durch eine doppelte Umbiegung eines Haltebereichs (37) der oberen Klammer (30) gebildet ist.

3. Längseinsteller nach einem der vorstehenden Ansprüche, **dadurch gekennzeichnet, dass** der mindestens eine untere Sperrbereich (59) durch eine doppelte Umbiegung eines Seitenbereichs (57) der unteren Klammer (50) gebildet ist.

4. Längseinsteller nach einem der vorstehenden Ansprüche, **dadurch gekennzeichnet, dass** die obere Klammer (30) sich in Längsrichtung nach hinten über die Oberschiene (3) hinaus erstreckt.

5. Längseinsteller nach einem der vorstehenden Ansprüche, **dadurch gekennzeichnet, dass** die untere Klammer (50) sich in Längsrichtung nach hinten über die Unterschiene (5) hinaus erstreckt.

6. Längseinsteller nach einem der vorstehenden Ansprüche, **dadurch gekennzeichnet, dass** der Verriegelungsbügel (34) zwei in Längsrichtung verlaufende Schenkel (44) aufweist, welche durch den Bolzen (42) verbunden sind.

7. Längseinsteller nach Anspruch 6, **dadurch gekennzeichnet, dass** die obere Klammer (30) einen Befestigungsbereich (35) umfasst, welcher an der Oberschiene (3) befestigt ist, und dass der Befestigungsbereich (35) zwei Ausbuchtungen zur Aufnahme der Schenkel (44) umfasst.

8. Längseinsteller nach Anspruch 7, **dadurch gekennzeichnet, dass** die Aussparung (32) sich in Längsrichtung und in Querrichtung innerhalb des Befestigungsbereichs (35) erstreckt.

9. Längseinsteller nach einem der vorstehenden Ansprüche, **dadurch gekennzeichnet, dass** der Verriegelungsbügel (34) mit der oberen Klammer (30) verschweißt ist.

10. Fahrzeugsitz (1), umfassend mindestens einen Längseinsteller nach einem der vorstehenden Ansprüche.

11. Fahrzeugsitz (1) nach Anspruch 10, umfassend ein Sitzteil (2), welches an der Oberschiene (3) des Längseinstellers befestigt ist.

12. Fahrzeugsitz (1) nach Anspruch 11, **dadurch gekennzeichnet, dass** an dem Sitzteil (2) mindestens ein Fuß (24) angebracht ist, an welchem ein Schloss (40) vorgesehen ist.

13. Fahrzeugsitz (1) nach Anspruch 12, **dadurch gekennzeichnet, dass** das Schloss (40) mit dem Verriegelungsbügel (34) zusammen wirkt.

14. Fahrzeugsitz (1) nach einem der Ansprüche 12 bis 13, **dadurch gekennzeichnet, dass** das Schloss (40) in die Aussparung (32) eingreift.

15. Fahrzeugsitz (1) nach einem der Ansprüche 12 bis 14, **dadurch gekennzeichnet, dass** das Schloss (40) den Bolzen (42) umgreift.

## Claims

1. Longitudinal adjuster for a vehicle seat (1), comprising a lower rail (5) and an upper rail (3) displaceably guided therein in the longitudinal direction, wherein an upper clamp (30) is connected to the upper rail (3), wherein a locking shackle (34) is connected to the upper clamp (30), said locking shackle comprising a pin (42) extending in the transverse direction, wherein the upper clamp (30) has a recess (32), the pin (42) being arranged inside said recess, **characterized in that** a lower clamp (50) is connected to the lower rail (5), wherein the lower clamp (50) has at least one lower blocking region (59) and the upper clamp (30) has at least one upper blocking region (39), wherein the lower blocking region (59) and the upper blocking region (39) normally are spaced apart from one another and interlocked in the event of a crash, and **in that** the pin (42) is arranged in the longitudinal direction behind the rear end of the upper rail (3).

2. Longitudinal adjuster according to Claim 1, **characterized in that** the at least one upper blocking region (39) is formed by bending back twice a retaining region (37) of the upper clamp (30) .

3. Longitudinal adjuster according to one of the preceding claims, **characterized in that** the at least one lower blocking region (59) is formed by bending back twice a side region (57) of the lower clamp (50).

4. Longitudinal adjuster according to one of the preceding claims, **characterized in that** the upper clamp (30) extends in the longitudinal direction to the rear beyond the upper rail (3).

5. Longitudinal adjuster according to one of the preceding claims, **characterized in that** the lower clamp (50) extends in the longitudinal direction to the rear beyond the lower rail (5).

6. Longitudinal adjuster according to one of the preceding claims, **characterized in that** the locking shackle (34) has two arms (44) extending in the longitudinal direction, said arms being connected by the pin (42).

7. Longitudinal adjuster according to Claim 6, **characterized in that** the upper clamp (30) comprises a fastening region (35) which is fastened to the upper rail (3), and that the fastening region (35) comprises two bulged portions for receiving the arms (44).

8. Longitudinal adjuster according to Claim 7, **characterized in that** the recess (32) extends in the longitudinal direction and in the transverse direction inside the fastening region (35).

9. Longitudinal adjuster according to one of the preceding claims, **characterized in that** the locking shackle (34) is welded to the upper clamp (30) .

10. Vehicle seat (1) comprising at least one longitudinal adjuster according to one of the preceding claims.

11. Vehicle seat (1) according to Claim 10, comprising a seat part (2) which is fastened to the upper rail (3) of the longitudinal adjuster.

12. Vehicle seat (1) according to Claim 11, **characterized in that** at least one foot (24) is attached to the seat part (2), a lock (40) being provided on said foot.

13. Vehicle seat (1) according to Claim 12, **characterized in that** the lock (40) cooperates with the locking shackle (34).

14. Vehicle seat (1) according to one of Claims 12 to 13, **characterized in that** the lock (40) engages in the recess (32).

15. Vehicle seat (1) according to one of Claims 12 to 14, **characterized in that** the lock (40) encompasses the pin (42).

## Revendications

1. Dispositif de réglage longitudinal pour un siège de véhicule (1),
comprenant un rail inférieur (5) et un rail supérieur (3) guidé de manière déplaçable dans celui-ci dans la direction longitudinale,
une pince supérieure (30) étant connectée au rail supérieur (3),
un étrier de verrouillage (34) étant connecté à la pince supérieure (30), lequel comprend un boulon (42) s'étendant dans la direction transversale, la pince supérieure (30) présentant un évidement (32) à l'intérieur duquel est disposé le boulon (42),
**caractérisé en ce**
**qu'**une pince inférieure (50) est connectée au rail inférieur (5),
la pince inférieure (50) présentant au moins une région de blocage inférieure (59) et la pince supérieure (30) présentant au moins une région de blocage supérieure (39),
la région de blocage inférieure (59) et la région de blocage supérieure (39) étant espacées l'une de l'autre dans un cas normal, et s'accrochant l'une à l'autre en cas de collision, et
**en ce que** le boulon (42) est disposé dans la direction longitudinale derrière l'extrémité arrière du rail supérieur (3).

2. Dispositif de réglage longitudinal selon la revendication 1, **caractérisé en ce que** l'au moins une région de blocage supérieure (39) est formée par un double recourbement d'une région de retenue (37) de la pince supérieure (30).

3. Dispositif de réglage longitudinal selon l'une quelconque des revendications précédentes, **caractérisé en ce que** l'au moins une région de blocage inférieure (59) est formée par un double recourbement d'une région latérale (57) de la pince inférieure (50).

4. Dispositif de réglage longitudinal selon l'une quelconque des revendications précédentes, **caractérisé en ce que** la pince supérieure (30) s'étend dans la direction longitudinale vers l'arrière au-delà du rail supérieur (3).

5. Dispositif de réglage longitudinal selon l'une quelconque des revendications précédentes, **caractérisé en ce que** la pince inférieure (50) s'étend dans la direction longitudinale vers l'arrière au-delà du rail inférieur (5).

6. Dispositif de réglage longitudinal selon l'une quelconque des revendications précédentes, **caractérisé en ce que** l'étrier de verrouillage (34) présente deux branches s'étendant dans la direction longitudinale (44), lesquelles sont reliées par le boulon (42).

7. Dispositif de réglage longitudinal selon la revendication 6, **caractérisé en ce que** la pince supérieure (30) comprend une région de fixation (35) qui est fixée au rail supérieur (3) et **en ce que** la région de fixation (35) comprend deux renflements pour recevoir les branches (44).

8. Dispositif de réglage longitudinal selon la revendication 7, **caractérisé en ce que** l'évidement (32) s'étend dans la direction longitudinale et dans la direction transversale à l'intérieur de la région de fixation (35).

9. Dispositif de réglage longitudinal selon l'une quelconque des revendications précédentes, **caractérisé en ce que** l'étrier de verrouillage (34) est soudé à la pince supérieure (30).

10. Siège de véhicule (1), comprenant au moins un dispositif de réglage longitudinal selon l'une quelconque des revendications précédentes.

11. Siège de véhicule (1) selon la revendication 10, comprenant une partie de siège (2) qui est fixée au rail supérieur (3) du dispositif de réglage longitudinal.

12. Siège de véhicule (1) selon la revendication 11, **caractérisé en ce qu'**au moins un pied (24) est monté sur la partie de siège (2), une serrure (40) étant prévue sur ledit pied.

13. Siège de véhicule (1) selon la revendication 12, **caractérisé en ce que** la serrure (40) coopère avec l'étrier de verrouillage (34).

14. Siège de véhicule (1) selon l'une quelconque des revendications 12 à 13, **caractérisé en ce que** la serrure (40) s'engage dans l'évidement (32).

15. Siège de véhicule (1) selon l'une quelconque des revendications 12 à 14, **caractérisé en ce que** la serrure (40) vient en prise autour du boulon (42).
